Europäisches Patentamt

European Patent Office

Office européen des brevets

(19)

(11) Numéro de publication: **0 279 734**
**B1**

(12) **FASCICULE DE BREVET EUROPEEN**

(45) Date de publication du fascicule du brevet:
27.06.90

(21) Numéro de dépôt: 88400281.7

(22) Date de dépôt: 08.02.88

(51) Int. Cl.⁵: **G11B 5/704,** G11B 5/64,
H01F 10/30

(54) Substrat pour mémoire à disque magnétique et procédé de fabrication.

(30) Priorité: **11.02.87 FR 8701706**

(43) Date de publication de la demande:
**24.08.88 Bulletin 88/34**

(45) Mention de la délivrance du brevet:
**27.06.90 Bulletin 90/26**

(84) Etats contractants désignés:
**BE CH DE GB IT LI NL**

(56) Documents cités:
**EP-A- 0 152 329**
**US-A- 3 290 692**

**PATENT ABSTRACTS OF JAPAN,**
**vol. 8, no. 38 (P-255)[1475], 18 février 1984; &**
**JP-A-58 189 836 (NIPPON DENKI K.K.) 05.11.1983**
**PATENT ABSTRACTS OF JAPAN,**
**vol. 7, no. 117 (P-198)[1262], 21 mai 1983; &**
**JP-A-58 35 726 (HITACHI SEISAKUSHO K.K.) 02.03.1983**

(73) Titulaire: **COMMISSARIAT A L'ENERGIE ATOMIQUE,**
**31/33, rue de la Fédération, F-75015 Paris(FR)**

(72) Inventeur: **Lazzari, Jean-Pierre, 45, Chemin de Malanot,**
**F-38700 Corenc(FR)**

(74) Mandataire: **Mongrédien, André et al, c/o**
**BREVATOME 25, rue de Ponthieu, F-75008 Paris(FR)**

ACTORUM AG

## Description

La présente invention a pour objet un substrat pour mémoire à disque magnétique et un procédé de fabrication de ce substrat.

Une mémoire à disque pour le stockage de masse comprend une couche magnétique dans laquelle sont enregistrées des informations binaires, généralement sous la forme d'une direction d'aimantation. Une tête de lecture vole au-dessus de ce disque à une distance de l'ordre de 0,5μm, et lit l'information magnétique contenue dans la couche.

Le substrat sur lequel est déposé la couche magnétique doit présenter un certain nombre de qualités : être bon marché, être léger (il doit accepter des accélérations et des freinages en rotation rapides), présenter une planéité et un état de surface excellents.

Les substrats de l'art antérieur sont obtenus en découpant une galette dans une feuille d'aluminium. On obtient ainsi un disque avec un trou central. Cette galette brute est ensuite surfacée puis polie.

Une couche de nickel-phosphore est déposée par électrolyse, car l'aluminium est difficile à polir. La couche de nickel-phosphore est ensuite repolie pour atteindre à la fois une planéité de l'ordre de ± 5μm et un état de surface approprié.

Un substrat avec nickel-phosphore est décrit par exemple dans la demande de brevet japonais de R. HIKITA n°59-124025 publiée le 18 Juillet 1984.

Cette technique présente des inconvénients, en particulier parce qu'elle conduit à un prix de revient élevé, en grande partie à cause des opérations de polissage.

Dans certains cas, après avoir poli la surface du disque, on pratique à l'aide d'une poudre diamant, des micro-rayures circulaires de 0,50 nm de profondeur, qui évitent au patin de vol de se coller sur la surface du disque. Mais cette opération ne fait qu'augmenter encore le prix du substrat.

Un autre inconvénient important apparaît dans l'utilisation de ces substrats. Lorsqu'ils sont revêtus de la couche mince magnétique qui constitue le support de l'information, les défauts de l'aluminium (inclusions, impuretés, etc ...), diffusent à travers la couche de nickel-phosphore jusque dans la couche magnétique créant ainsi des défauts irréparables.

Une autre technique a été décrite récemment dans EP-A 0 152 329. Elle consiste à utiliser un disque métallique recouvert d'une couche organique sur laquelle est déposée une couche mince dure d'un matériau à base de silicate hydraté ou de silice. Bien que satisfaisante à certains égards, cette technique reste complexe de mise en œuvre.

On connaît également, par le brevet américain US-A 3 290 692 des disques ou des tambours recouverts d'une feuille en résine synthétique ou en vinyle précontraint. Mais, dans ce cas, l'état de planéité dépend de la feuille utilisée et le contact feuille-disque n'est pas toujours satisfaisant.

Enfin, on connaît, par l'abrégé de brevet japonais vol. 8, no. 38 du 18.02.1984 correspondant au document JP-A 58 189 836 un disque d'aluminium recouvert d'une résine thermoducissable. Les inconvénients de cette solution sont les mêmes que ceux de la technique décrite dans l'US-A 3 290 692.

La présente invention a justement pour but de proposer un nouveau substrat pour mémoires à disques, qui ne présente pas les inconvénients précédents.

De façon précise, la présente invention a pour objet un substrat pour mémoire à disque magnétique que, comprenant une galette d'aluminium recouverte sur au moins l'une de ses faces d'une feuille en matière plastique adhérant à la galette d'aluminium, cette feuille offrant une surface extérieure lisse, ce substrat étant caractérisé par le fait que la feuille a été pressée à chaud sur la galette.

La présente invention a également pour objet un procédé de fabrication d'un tel substrat dans lequel on réalise une galette à l'aide d'une feuille d'aluminium et on dépose sur au moins une face de cette galette une feuille en matière plastique, ce procédé étant caractérisé par le fait que, pour déposer cette feuille on la presse à chaud sur la galette à l'aide d'au moins un plateau ayant l'état de surface requis.

De préférence, le plateau présente des reliefs qui impriment en creux des gorges dans la feuille de plastique.

Dans un tel procédé, c'est la planéité des plateaux de pressage qui va définir la planéité du disque finalement obtenu. Par ailleurs, il sera possible d'obtenir des reliefs particuliers. Ces avantages ne se retrouvent pas dans l'art antérieur.

De toute façon, les caractéristiques de l'invention apparaîtront mieux à la lumière de la description qui va suivre, d'exemples de réalisation donnés à titre explicatif et nullement limitatif. Cette description se réfère à des dessins annexés sur lesquels:

- la figure 1 représente une installation permettant de réaliser un substrat selon l'invention,
- la figure 2 montre, en coupe, un substrat dans une enveloppe de protection,
- la figure 3 montre, en coupe, un détail du substrat,
- la figure 4 montre l'allure de micro-gorges formées dans la face extérieure du substrat.

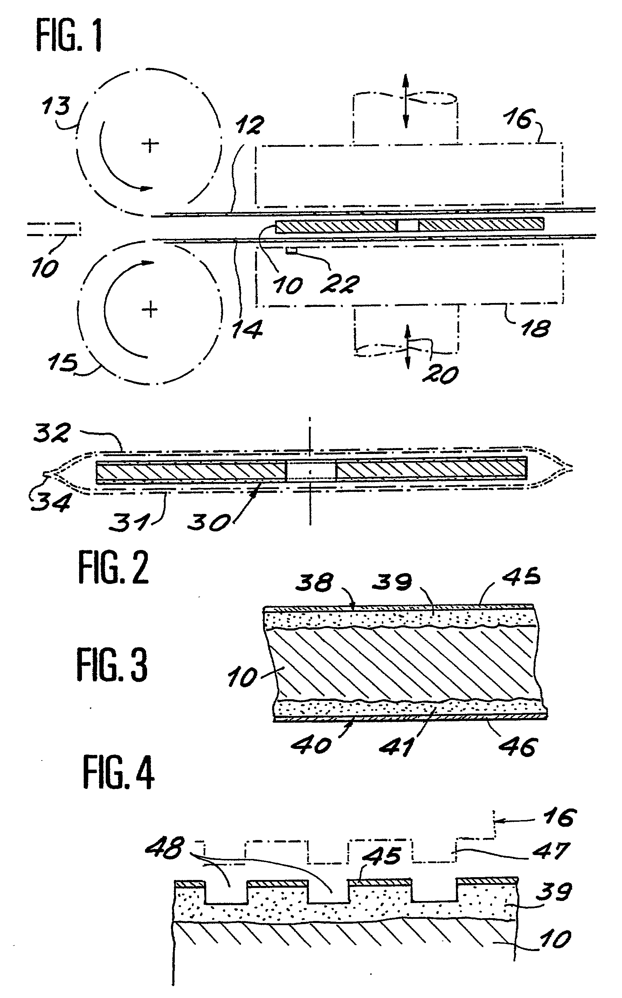

On voit sur la figure 1 une galette d'aluminium 10 non polie, juste dressée après détourage. Cette galette est disposée entre deux feuilles de plastique 12 et 14, débitées respectivement par des rouleaux 13 et 15. Deux plateaux 16 et 18 sont disposés de part et d'autre de la galette et sont reliés à une presse 20. Des capteurs optiques 22, disposés par exemple à 120° les uns des autres, permettent de centrer le disque 10 par rapport aux plateaux.

Les feuilles de plastique sont par exemple en polycarbonate, en nylon, en kapton, en polyimide, etc... ou en composition organique adaptée à une bonne adhérence sur l'aluminium.

Les plateaux 16 et 18 ont des surfaces de pressage parallèles l'une à l'autre, ce qui assure un excellent parallélisme entre les faces du substrat une fois pressées et ceci quel que soit le parallélisme des faces de la galette d'aluminium.

Afin d'assurer une bonne adhérence des feuilles de plastique, la galette peut être revêtue au préalable d'une résine, avant l'application et le pressage des feuilles de plastique. Ce revêtement peut être obtenu par trempage de la galette dans une solution adhésive.

Les plateaux 16 et 18 peuvent également comporter des tiges de centrage qui tiennent la galette lors du mouvement de rapprochement des plateaux.

Lorsque les plateaux sont encore pressés contre la galette d'aluminium, les feuilles de plastique sont découpées à leur périphérie et au centre de la galette. Il est en effet préférable d'effectuer cette opération lorsque les surfaces extérieures du substrat sont protégées, afin d'éliminer tout risque de pollution par des particules. Après pressage, les plateaux 16 et 18 s'écartent, libérant le disque.

Il est préférable de ne pas découper intégralement les feuilles de plastique afin de laisser subsister une liaison entre les disques. Ceux-ci sont alors reliés les uns aux autres par une guirlande en plastique. Cette liaison est ensuite facilement rompue lorsqu'on veut manipuler un substrat.

Pour protéger le substrat dès sa réalisation, on peut le disposer entre deux feuilles de plastique de protection 31 et 32 immédiatement après pressage, comme représenté sur la figure 2 et souder à chaud ces feuilles le long de leur périphérie 34. On constitue ainsi une enveloppe protectrice étanche à l'intérieur de laquelle se trouve le substrat 30.

La figure 3 montre, de manière plus détaillée, le résultat obtenu après pressage. Les surfaces extérieures 38 et 40 des feuilles pressées 39 et 41, présentent un excellent état de surface, lequel est obtenu sans polissage mécanique. La galette 10 peut donc présenter un état de surface médiocre (les aspérités ont été exagérées sur la figure 3) puisqu'elle est enrobée par les feuilles de plastique. Les faces de la galette ne nécessitent pas non plus un très grand degré de propreté, puisque les particules éventuelles portées par ces faces se trouveront emprisonnées entre les feuilles de plastique et la galette d'aluminium.

Avec le substrat de l'invention, les couches magnétiques 45 et 46 qui formeront le support d'enregistrement (et qui sont représentées sur la figure 3) se trouvent séparées de la galette d'aluminium, ce qui évite les contaminations ioniques, comme évoqué plus haut à propos de l'art antérieur.

L'invention permet également de réaliser très simplement des gorges ou des rayures dans la surface extérieure du substrat. Par exemple, afin de bien séparer les pistes d'enregistrement, ce qui présente l'avantage de réduire la diaphonie, les plateaux 16 et 18 peuvent présenter des reliefs circulaires 47 comme illustré sur la figure 4. Lors du pressage, ces reliefs sont transférés dans les feuilles de plastique, où ils forment des gorges 48. La couche magnétique 45 subsiste alors uniquement entre ces gorges pour former des pistes circulaires. Les gorges 48 constituent des plages interpistes qui sont enterrées dans le plastique. Ces plages se situent à une distance de la tête de lecture plus grande que celle qu'on obtiendrait avec une face uniforme. Elles produisent donc un signal perturbateur plus faible.

Un autre avantage de l'invention est de résoudre le problème du collage des têtes. Comme indiqué plus haut lorsque la surface du disque est parfaitement plane, il arrive que les patins supportant les têtes d'écriture et de lecture, se collent sur le disque. La solution classique à ce problème consiste à provoquer artificiellement des microrayures à l'aide de brosses fines. L'invention permet d'obtenir de telles microrayures de manière beaucoup plus simple, directement lors de l'opération de pressage : il suffit d'utiliser des plateaux présentant des microreliefs obtenus par un usinage approprié.

Afin d'avoir des surfaces de pressage d'une très grande propreté, il convient de nettoyer régulièrement les plateaux soit entre chaque pressage, soit au bout d'un certain nombre de pressages. Deux jeux de plateaux par face peuvent être utilisés. Pendant qu'un des jeux est utilisé pour le pressage, l'autre subit un nettoyage. Tout mode de nettoyage connu peut être utilisé, y compris le nettoyage par plasma d'oxygène pour éliminer les composés organiques.

**Revendications**

1. Substrat pour mémoire à disque magnétique, comprenant une galette d'aluminium (10) recouverte sur au moins l'une de ses faces d'une feuille en matière plastique (39, 41) adhérant à la galette d'aluminium, cette feuille offrant une surface extérieure (38, 40) lisse, ce substrat étant caractérisé par le fait que la feuille a été pressée à chaud sur la galette.

2. Substrat selon la revendication 1, caractérisé par le fait que le plastique est pris dans la famille qui comprend le polycarbonate, le nylon, le kapton, le polyimide.

3. Substrat selon la revendication 1, caractérisé par le fait qu'il comprend une couche adhésive entre la galette d'aluminium et la feuille en plastique.

4. Substrat selon la revendication 1, caractérisé par le fait que la feuille de plastique présente, après pressage, des gorges (48).

5. Procédé de fabrication d'un substrat selon la revendication 1, dans lequel on réalise une galette (10) à l'aide d'une feuille d'aluminium et on dépose sur au moins une face de cette galette (10) une feuille en matière plastique, ce procédé étant caractérisé par le fait que, pour déposer cette feuille (12, 14) on la presse à chaud sur la galette à l'aide d'au moins un plateau (16, 18) ayant l'état de surface requis.

6. Procédé selon la revendication 5, caractérisé par le fait que le plateau (16, 18) présente des reliefs (47) qui impriment en creux des gorges (48) dans la feuille de plastique.

7. Procédé selon la revendication 5, caractérisé par le fait qu'il consiste, en outre, à faire passer le substrat obtenu (30) entre deux feuilles de plastique (31, 32) et à souder à chaud les deux feuilles le long d'une couronne circulaire (34) pour constituer une enveloppe protectrice étanche.

## Patentansprüche

1. Substrat für einen Magnetplattenspeicher mit einer Aluminiumscheibe (10), die auf wenigstens einer ihrer Seiten mit einem Plastikblatt (39, 41), das auf der Aluminiumscheibe haftet, bedeckt ist, wobei dieses Blatt eine glatte, äußere Oberfläche (38, 40) bildet, wobei das Substrat charakterisiert ist durch die Tatsache, daß das Blatt warm auf die Scheibe gepresst wurde.

2. Substrat nach Anspruch 1, gekennzeichnet durch die Tatsache, daß das Plastik aus der Familie genommen wird, die das Polykarbonat, das Nylon, das Kapton und das Polyimid umfaßt.

3. Substrat nach Anspruch 1, gekennzeichnet durch die Tatsache, daß es eine Klebeschicht zwischen der Aluminiumscheibe und dem Plastikblatt aufweist.

4. Substrat nach Anspruch 1, gekennzeichnet durch die Tatsache, daß das Plastikblatt nach dem Pressen Vertiefungen (48) aufweist.

5. Verfahren zur Herstellung eines Substrats nach Anspruch 1, bei dem man eine Scheibe (10) mit Hilfe eines Aluminiumblattes bildet und man auf wenigstens eine Seite dieser Scheibe (10) ein Plastikblatt aufbringt, wobei dieses Verfahren gekennzeichnet ist durch die Tatsache, daß man zum Aufbringen des Blattes (12, 14) dieses warm mit Hilfe einer Platte (16, 18) mit dem geforderten Oberflächenzustand auf die Scheibe presst.

6. Verfahren nach Anspruch 5, gekennzeichnet durch die Tatsache, daß die Platte (16, 18) Erhebungen (47) aufweist, die sich als Vertiefungsmulden (48) in das Plastikblatt einprägen.

7. Verfahren nach Anspruch 5, gekennzeichnet durch die Tatsache, daß es außerdem darin besteht, das erhaltene Substrat (30) zwischen zwei Plastikblätter (31, 32) zu bringen und die beiden Blätter entlang einer kreisförmigen Krone (34) warm zu verschweißen, um eine dichte Schutzhülle zu bilden.

## Claims

1. Substrate for a magnetic disk memory comprising an aluminium wafer (10) covered on at least one of its faces by plastic material sheet (39, 41) adhering to the aluminium wafer, said sheet offering a smooth outer surface (38, 40) said substrate being characterized in that the sheet is hot pressed onto the wafer.

2. Substrate according to claim 1, characterized in that the plastic is taken from the group including polycarbonate, nylon, kapton and polyimide.

3. Substrate according to claim 1, characterized in that it comprises an adhesive layer between the aluminium wafer and the plastic sheet.

4. Substrate according to claim 1, characterized in that, after pressing, the plastic sheet has circular grooves (48).

5. Process for producing a substrate according to claim 1, in which a wafer (10) is made with the aid of an aluminium sheet and on at least one face of said wafer (10) is deposited plastic material sheet, said process being characterized in that, for depositing said sheet, it is pressed hot onto the wafer with the aid of a plate (16, 18) having the requisite surface state.

6. Process according to claim 5, characterized in that the plate (16, 18) has reliefs (47) which make grooves (48) in the plastic sheet.

7. Process according to claim 5, characterized in that it also comprises passing the substrate (30) obtained between two plastic sheets (31, 32) and hot welding the two sheets along a circular ring (34) in order to constitute a tight protective envelope.

EP 0 279 734 B1

FIG. 1

13
12
16
10
10  22
14
18
15
20

32
34
31  30

FIG. 2

38  39  45

FIG. 3

10

40  41  46

FIG. 4

48  16
45  47
39
10